# EUROPEAN PATENT SPECIFICATION

(11) **EP 3 203 113 B1**
(45) Date of publication and mention of the grant of the patent: **27.02.2019**
(21) Application number: 15845863.8
(22) Date of filing: 29.09.2015
(51) Int. Cl.: F16H 7/24

(54) **BELT ATTACHMENT TOOL**
WERKZEUG ZUR BEFESTIGUNG AN EINEM GURT
OUTIL DE FIXATION DE COURROIE

(30) Priority: 30.09.2014 JP 2014201007; 10.09.2015 JP 2015178450
(43) Date of publication of application: 09.08.2017
(73) Proprietor: Mitsuboshi Belting Ltd., Kobe-shi, Hyogo 653-0024 (JP)
(72) Inventor: AOKI Yasuhito, Kobe-shi Hyogo 653-0024 (JP)
(74) Representative: Hoffmann Eitle
(86) International application number: PCT/JP2015/077617
(87) International publication number: WO 2016/052566

(56) References cited:
- WO-A1-2013/042299
- JP-A- H08 277 894
- JP-A- 2007 531 857
- JP-A- 2013 199 969
- JP-A- 2014 029 191
- US-A- 2 470 810

## Description

### TECHNICAL FIELD

The present invention relates to a belt attachment tool used in the case of winding a belt on a plurality of (three or more) pulleys.

### BACKGROUND ART

Generally, a belt power transmission mechanism configured to wind a belt on a plurality of pulleys has specifications where high tension is applied to the belt by making a circumferential length of the belt shorter than a circumferential length of a layout between the pulleys that are mounting targets for surely transmitting power between the pulleys.

In the case where such a belt power transmission mechanism described above has no tension pulley or the like capable of adjusting a shaft center position of the pulley, when a belt with the circumferential length shorter than the circumferential length of the layout between the plurality of pulleys is attached to the plurality of pulleys with all distances between mutual shafts fixed, one pulley is left lastly and the belt is previously wound on the other pulleys and tension is applied to the belt wound on the other pulleys, and a belt attachment tool for attaching the belt to outer peripheral surfaces of the pulleys while rotating the lastly left pulley is used.

For example, Patent Document 1 discloses a belt attachment tool used in the case of winding a belt on three pulleys. In a layout (see FIG. 2 etc. of Patent Document 1) of the three pulleys PI, P2 and P3, the belt attachment tool is mounted to the pulley P1 with the largest diameter and a long wound belt portion, and tension is applied to the belt V wound on the pulleys P2 and P3 other than the pulley PI, and the pulley P1 is rotated to thereby attach the belt to the three pulleys by using the belt attachment tool. Thus, in the case of attaching a belt to a plurality of pulleys by using the belt attachment tool, the pulley P1 with the largest diameter and a long wound belt portion tends to be selected as the pulley to which the belt attachment tool is mounted for a reason that "it is easier to attach a belt by lastly winding the belt on the pulley with a longer wound belt portion (it is easier to do winding work)".

However, for reasons that "it may be preferable in some cases to first wind a belt on the pulley with the largest diameter and a long wound belt portion since a misalignment is increased when the belt is lastly wound on the pulley with the largest diameter and a long wound belt portion", or "a component causing a barrier is present in the vicinity of the pulley with the largest diameter and a long wound belt portion and it may be physically difficult to do attaching work", there are cases where the pulley with the largest diameter and a long wound belt portion cannot be selected as the pulley to which the belt attachment tool is mounted.

In such cases, a pulley (a pulley with a diameter smaller than that of the large-diameter pulley: hereinafter called a small-diameter pulley) other than the pulley with the largest diameter (hereinafter called a large-diameter pulley) has to be selected as the pulley to which a belt attachment tool is mounted.

### PRIOR ART DOCUMENT

### PATENT DOCUMENT

Patent Document 1: JP-A-2014-29191

### SUMMARY OF THE INVENTION

### PROBLEMS THAT THE INVENTION IS TO SOLVE

When a belt attachment tool is mounted to such a small-diameter pulley and the belt is lastly wound thereon, a belt portion wound on the small-diameter pulley becomes shorter than that of the large-diameter pulley. Therefore, belt tension at the time of lastly winding the belt on the small-diameter pulley becomes high and, for example, the belt attachment tool and the small-diameter pulley run idle or are inversely rotated and thus, it may become difficult to do winding work of the belt as compared to the case of mounting the belt attachment tool to the large-diameter pulley and lastly winding the belt thereon.

Hence, the present invention has been made to solve the problem as described above, and provides a belt attachment tool capable of smoothly doing winding work of a belt by preventing the belt attachment tool and a pulley from running idle or being inversely rotated due to tension of the belt at the time of winding the belt on a plurality of (three or more) pulleys.

### MEANS FOR SOLVING THE PROBLEMS

A belt attachment tool of the present invention for solving the problem described above is a belt attachment tool used for further winding a belt, which is wound on a first pulley and a second pulley and is stretchable in a direction of a circumferential length, on a third pulley by using rotation of the third pulley, the belt attachment tool containing:
a side surface part installed on a side of one side surface of the third pulley,
an attaching part installed along an outer peripheral part of the third pulley,
a first belt holding part formed along an outer periphery of the side surface part, and
a second belt holding part formed on the side surface part,
in which the second belt holding part is formed on the side surface part so as to satisfy, when the belt is wound on the first pulley, the second pulley, the first belt holding part, and the second belt holding part, a first arrangement condition where the second belt holding part is arranged so that a point of intersection between a first extension line extending the belt wound on the first belt holding part from an outer periphery of the second pulley and a second extension line extending the belt wound on the second belt holding part from an outer periphery of the first pulley is located to a front side in a rotation direction of the third pulley with respect to a center line connecting a center of the first pulley with a center of the third pulley. And characterized in that the side surface part comprises a protection part, the protection part covering at least substantially the center of the one side surface of the third pulley.

According to the configuration described above, the side surface part of the belt attachment tool is installed on the one side surface of the third pulley and the attaching part is arranged along the outer peripheral part of the third pulley and thus, the belt attachment tool can stably be installed on the third pulley.

Also, in the present belt attachment tool, the first belt holding part and the second belt holding part are formed on the side surface part, and the first belt holding part is arranged along the outer periphery of the side surface part, and the second belt holding part is arranged so that, in a state where the belt is wound on the first pulley, the second pulley, the first belt holding part and the second belt holding part, the point of intersection between the first extension line extending the belt wound on the first belt holding part from the outer periphery of the second pulley and the second extension line extending the belt wound on the second belt holding part from the outer periphery of the first pulley is located to the front side in the rotation direction of the third pulley with respect to the center line connecting the center of the first pulley with the center of the third pulley (first arrangement condition).

If the second belt holding part is arranged so that the point of intersection between the first extension line and the second extension line is located to a back side in the rotation direction of the third pulley with respect to the center line connecting the center of the first pulley with the center of the third pulley, there are cases where the third pulley is inversely rotated (tension in a direction toward the second pulley is applied to the belt) or the belt attachment tool itself is slid on the third pulley to run idle and thus the belt cannot be wound on the outer periphery of the third pulley. However, the second belt holding part is arranged so that the point of intersection between the first extension line and the second extension line is located to the front side in the rotation direction of the third pulley with respect to the center line connecting the center of the first pulley with the center of the third pulley and thus, the third pulley can be prevented from being inversely rotated since tension is applied to the belt in a forward rotation direction of the third pulley (tension is applied to the belt in a direction toward the first pulley).

Also, in the belt attachment tool as one aspect of the present invention, it is preferable that the second belt holding part is formed on the side surface part so as to further satisfy, when the belt is wound on the first pulley, the second pulley, the first belt holding part, and the second belt holding part, a second arrangement condition where the second belt holding part is arranged to a front side in the rotation direction of the third pulley with respect to a center line connecting a center of the second pulley with the center of the third pulley.

According to the configuration described above, the second belt holding part is arranged to the front side in the rotation direction of the third pulley with respect to the center line connecting the center of the second pulley with the center of the third pulley (the second arrangement condition) and thus, tension applied to the whole belt at the time of winding the belt on the first pulley, the second pulley, the first belt holding part and the second belt holding part can be decreased as compared with the case where the second belt holding part is located in the back side in the rotation direction of the third pulley with respect to the center line connecting the center of the second pulley with the center of the third pulley. Accordingly, rotation of the third pulley in the rotation direction (the direction toward the first pulley) at the time of winding the belt on the outer periphery of the third pulley can be facilitated.

Also, in the belt attachment tool as one aspect of the present invention, it is preferable that the side surface part includes an installation part brought into contact with at least a part of the one side surface of the third pulley, and a protection part which does not come into contact with the one side surface of the third pulley and covers at least a part of the one side surface, and
the protection part covers at least a part of a portion with the longest distance in a vertical direction from a plane defined by a portion with which the installation part comes into contact in the one side surface, in a region inward the portion with which the installation part comes into contact in the one side surface of the third pulley.

According to the configuration described above, the protection part covers at least a part of the portion with the longest distance in the one side surface of the third pulley (including the case where the distance from the plane defined by the portion with which the installation part comes into contact in the one side surface of the third pulley is zero) in the vertical direction from the plane defined by the portion with which the installation part comes into contact, in the region inward the portion with which the installation part comes into contact in the one side surface of the third pulley. Therefore, interference between the belt and the portion with the longest distance in the one side surface of the third pulley in the vertical direction from the plane defined by the portion with which the installation part comes into contact can be prevented from occurring at the time of winding the belt on the third pulley, to thereby protect the belt and the portion with the longest distance in the one side surface of the third pulley in the vertical direction from the plane defined by the portion with which the installation part comes into contact.

Also, in the belt attachment tool as one aspect of the present invention, it is preferable that the installation part is coupled to the protection part in a stepped manner.

According to the configuration described above, the protection part is coupled to the installation part in a stepped manner, and thus a gap is formed by the step between the protection part and the portion with the longest distance in the one side surface of the third pulley in the vertical direction from the plane defined by the portion with which the installation part comes into contact. Therefore, the protection part can surely cover the portion without making contact with the portion with the longest distance in the one side surface of the third pulley in the vertical direction from the plane defined by the portion with which the installation part comes into contact.

Also, in the belt attachment tool as one aspect of the present invention, a part of the first belt holding part may be projected outwardly from the outer periphery of the side surface part.

According to the configuration described above, a part of the first belt holding part is projected outwardly from the outer periphery of the side surface part. Therefore, the belt can be spaced from the outer periphery of the side surface part (the outer periphery of the third pulley) at the time of winding it on the first belt holding part. As a result, it becomes easy to wind the belt on the outer periphery of the third pulley from the first belt holding part, and the belt can smoothly be shifted to the outer periphery of the third pulley.

Also, in the belt attachment tool as one aspect of the present invention, a portion of the first belt holding part on which the belt is wound may have a substantially circular arc shape.

According to the configuration described above, the portion of the first belt holding part on which a belt is wound is formed in a substantially circular arc shape. Therefore, a load on the belt at the time of winding the belt on the first belt holding part can be reduced.

Also, in the belt attachment tool as one aspect of the present invention, a portion of the first belt holding part on which the belt is wound may have a substantially involute curve shape, and the first belt holding part and the second belt holding part may be arranged in a straight line.

According to the configuration described above, the portion of the first belt holding part on which a belt is wound is formed in a substantially involute curve shape and thus, the belt can efficiently be wound without applying excessive tension at the time of winding the belt on the first belt holding part. Also, since the first belt holding part and the second belt holding part are arranged in a straight line, the length of the belt at the time of winding the belt on the first belt holding part and the second belt holding part can be set in the shortest length to thereby minimize a force by which the belt is stretched. As a result, a workload of winding the belt on the third pulley by using the belt attachment tool can be reduced.

In the belt attachment tool as one aspect of the present invention, it is preferable that the first belt holding part is formed integrally with the second belt holding part.

According to the configuration described above, the first belt holding part is formed integrally with the second belt holding part. Therefore, strength can be increased as compared with the case where the first belt holding part is formed separately from the second belt holding part.

In the belt attachment tool as one aspect of the present invention, it is preferable that in the first belt holding part and the second belt holding part that are integrally formed, a portion on which the belt is wound has a substantially circular arc shape.

According to the configuration described above, the portion of the integrally formed first belt holding part and second belt holding part on which the belt is wound is formed in a substantially circular arc shape. Therefore, a load on the belt at the time of winding the belt can be reduced.

### ADVANTAGEOUS EFFECT OF THE INVENTION

A belt attachment tool capable of smoothly doing winding work of a belt while preventing, at the time of winding the belt on the plurality of pulleys, the belt attachment tool and a pulley from running idle or being inversely rotated due to the tension of the belt can be provided.

### BRIEF DESCRIPTION OF DRAWINGS

FIG. 1 is a perspective view of a belt attachment tool according to the present embodiment.
FIG. 2 is six orthogonal views of a belt attachment tool according to the present embodiment.
FIG. 3 is a layout of a first pulley, a second pulley and a third pulley, according to the present embodiment.
FIG. 4A is an explanatory diagram of a third pulley according to the present embodiment.
FIG. 4B is an explanatory diagram of a third pulley according to the present embodiment.
FIG. 4C is an explanatory diagram of a third pulley according to the present embodiment.
FIG. 5A is an explanatory diagram describing the first arrangement condition and the second arrangement condition of a first belt holding part and a second belt holding part according to the present embodiment.
FIG. 5B is an explanatory diagram of a region in which the first arrangement condition of a first belt holding part and a second belt holding part is satisfied.
FIG. 5C is an explanatory diagram of a region in which the first arrangement condition and the second arrangement condition of a first belt holding part and a second belt holding part are satisfied.
FIG. 6A is a diagram describing a relation among tension of a V-ribbed belt, a first belt holding part and a second belt holding part according to the present embodiment.
FIG. 6B is a diagram describing a relation among tension of a V-ribbed belt, a first belt holding part and a second belt holding part according to the present embodiment.
FIG. 7 is a cross-sectional view in the case of attaching a belt attachment tool according to the present embodiment to a third pulley.
FIG. 8A is a first explanatory diagram of a method for using a belt attachment tool according to the present embodiment.
FIG. 8B is a first explanatory diagram of a method for using a belt attachment tool according to the present embodiment.
FIG. 8C is a first explanatory diagram of a method for using a belt attachment tool according to the present embodiment.
FIG. 8D is a second explanatory diagram of a method for using a belt attachment tool according to the present embodiment.
FIG. 8E is a second explanatory diagram of a method for using a belt attachment tool according to the present embodiment.
FIG 9 is six orthogonal views of a belt attachment tool according to another embodiment.
FIG 10 is six orthogonal views of a belt attachment tool according to another embodiment.
FIG. 11 is six orthogonal views of a belt attachment tool according to another embodiment.
FIG. 12A is an explanatory diagram of a method for using a belt attachment tool according to another embodiment.
FIG. 12B is an explanatory diagram of a method for using a belt attachment tool according to another embodiment.
FIG. 12C is an explanatory diagram of a method for using a belt attachment tool according to another embodiment.
FIG. 12D is an explanatory diagram of a method for using a belt attachment tool according to another embodiment.
FIG. 12E is an explanatory diagram of a method for using a belt attachment tool according to another embodiment.
FIG. 13 is six orthogonal views of a belt attachment tool according to another embodiment.

### MODE FOR CARRYING OUT THE INVENTION

### (Embodiment)

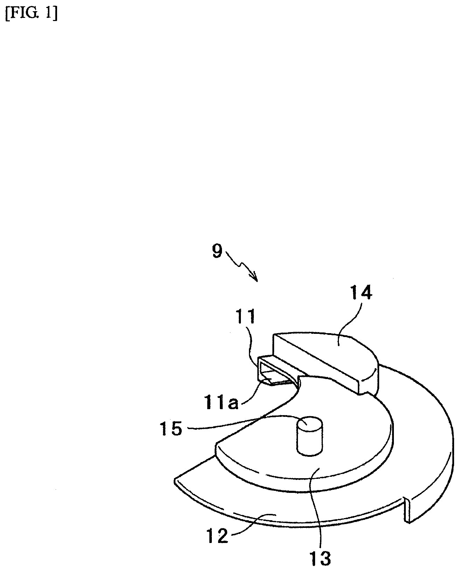

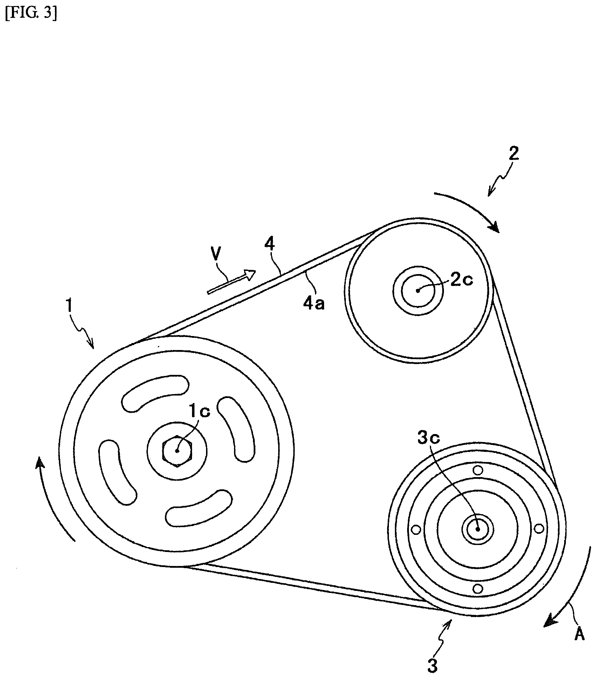

An embodiment of the present invention will hereinafter be described with reference to the drawings. A belt attachment tool 9 (see FIG. 1) according to the present embodiment is used in the case of winding a belt (a V-ribbed belt 4) stretchable in a direction of a circumferential length on a first pulley 1, a second pulley 2 and a third pulley 3 as illustrated in FIG. 3.

In a layout of an automobile engine, as illustrated in FIG. 3, the first pulley 1 connected to a crankshaft of an engine or the like, the second pulley 2 for driving a water pump and the third pulley 3 connected to a shaft of a compressor of an air conditioner or the like are supported rotatably at predetermined distances between shafts. And, the V-ribbed belt 4 is wound on the first pulley 1, the second pulley 2 and the third pulley 3, and power of the crankshaft of the engine or the like is transmitted to a shaft of the water pump through the first pulley 1 and the second pulley 2, and the water pump is driven. Also, the power of the crankshaft of the engine or the like is transmitted to the shaft of the compressor through the first pulley 1, the second pulley 2 and the third pulley 3, and the compressor is rotated. In the present embodiment, the distances between the respective shafts of the first pulley 1, the second pulley 2 and the third pulley 3 are fixed (cannot be changed). Also, the so-called auto tensioner (tension applying means) for applying tension to the V-ribbed belt 4 is not installed.

### (Structures of first pulley 1, second pulley 2 and third pulley 3)

The first pulley 1 has a pulley groove (a groove formed in an outer peripheral part of the first pulley 1) capable of being fitted into a rib 4a formed in an inner peripheral surface of the V-ribbed belt 4. Also, a crankshaft of an engine or the like is inserted into a boss part 1c formed in a central part of the first pulley 1.

Like the first pulley 1, the second pulley 2 has a pulley groove (a groove formed in an outer peripheral part of the second pulley 2) capable of being fitted into the rib 4a formed in the inner peripheral surface of the V-ribbed belt 4. Also, a shaft interlocked with a water pump is inserted into a boss part 2c formed in a central part of the second pulley 2.

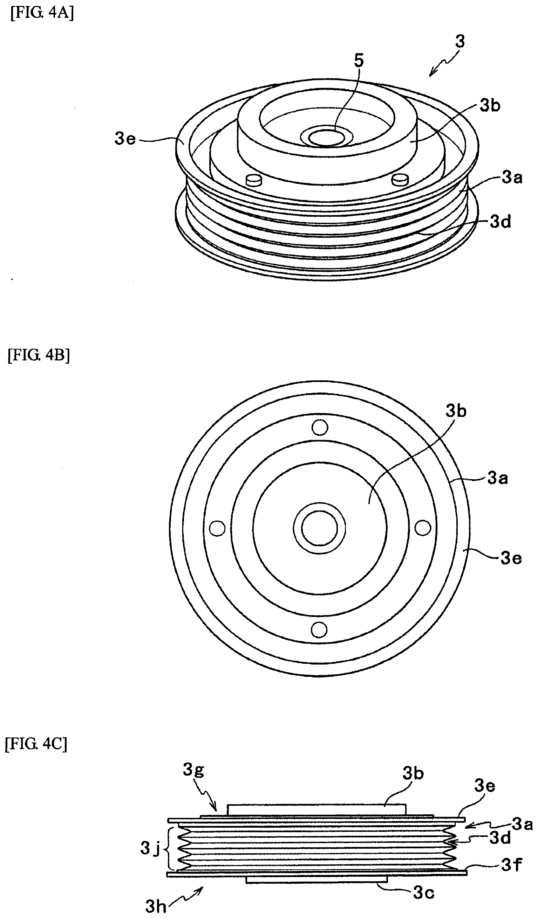

On the other hand, as illustrated in FIG. 4A to FIG. 4C, the third pulley 3 contains a compressor pulley 3a, a clutch hub 3b arranged on one side surface of the compressor pulley 3a, and a stator 3c arranged on the other side surface of the compressor pulley 3a. The compressor pulley 3a and the stator 3c are rotatably fitted into a shaft of a compressor, and the clutch hub 3b is fixed to the shaft of the compressor. In addition, the clutch hub 3b of the third pulley 3 is arranged so as to be projected from a side surface 3g of the compressor pulley 3a as illustrated in FIG 4C.

The third pulley 3 has a mechanism in which when the compressor is not driven, only the compressor pulley 3a is rotated; whereas for example, when a switch of the air conditioner is turned on, a current flows in a coil embedded in the stator 3c and it becomes a powerful magnet to strongly attract the clutch hub 3b, the clutch hub 3b is pressed to the compressor pulley 3a and as a result, the clutch hub 3b, the compressor pulley 3a and the stator 3c are integrated and the rotation of the compressor pulley 3a is transmitted from the integrated clutch hub 3b to the shaft of the compressor to rotate the compressor.

Also, as illustrated in FIG. 4A and FIG. 4C, the compressor pulley 3a of the third pulley 3 has a pulley groove 3d (a groove formed in an outer peripheral part 3j of the third pulley 3) capable of being fitted into the rib 4a formed in the inner peripheral surface of the V-ribbed belt 4, and contains a pair of pulley flanges 3e and 3f for sandwiching the pulley groove 3d in an axial direction of the pulley. The pulley flanges 3e and 3f are formed so as to be slightly projected from the pulley groove 3d in a radial outward direction of the third pulley 3 in side view of FIG. 4C. Also, the shaft of the compressor is inserted into a boss part 5 of the third pulley 3 and is fixed to the clutch hub 3b. Numerals 3g and 3h indicate side surfaces of the third pulley 3.

In the present embodiment, as illustrated in FIG. 3, the first pulley 1 is the pulley with the largest diameter among the three pulleys (first pulley 1, second pulley 2 and third pulley 3), and the third pulley 3 is the pulley with the second largest diameter, and the second pulley 2 is the pulley with the smallest diameter.

### (V-ribbed belt 4)

The V-ribbed belt 4 is a so-called low modulus belt that is slightly stretchable in a circumferential length direction. The low modulus belt has a relatively low modulus of elasticity by employing a polyamide fiber as a tension member, and prevents a sudden decrease in tension as compared with one having a high modulus of elasticity (so-called high modulus belt).

An arrow V of a thick line in FIG 3 indicates a running direction of the V-ribbed belt 4, and a rotation direction of the third pulley 3 at the time when the V-ribbed belt 4 runs in this running direction is defined as a rotation direction A, and a direction opposite to this rotation direction A is defined as an inverse rotation direction B.

### (Configuration of belt attachment tool 9)

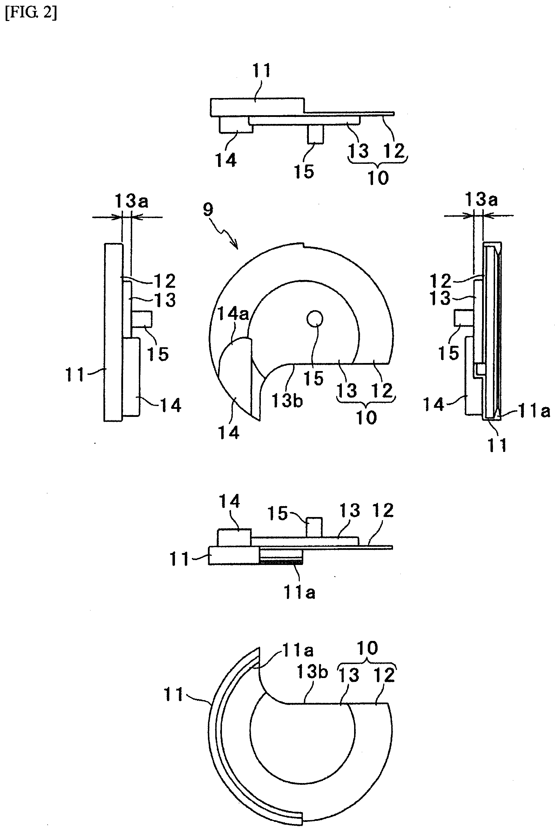

Next, a configuration of the belt attachment tool 9 according to the present embodiment will be described with reference to FIG 1 and FIG. 2.

As illustrated in FIG. 1 and FIG. 2, the belt attachment tool 9 contains, as main components, an attaching part 11 attached along the outer peripheral part 3j of the third pulley 3, a side surface part 10 including an installation part 12 brought into contact with a portion of the pulley flange 3e of one side surface 3g of the third pulley 3 and a protection part 13 for covering the clutch hub 3b of the third pulley 3, a first belt holding part 14 formed along an outer periphery of the installation part 12, and a second belt holding part 15 formed on the protection part 13.

The attaching part 11 is formed in a circular arc shape (a curved shape) along the outer peripheral part 3j of the compressor pulley 3a of the third pulley 3. Also, an inner peripheral surface side of the attaching part 11 is provided with a rib 11a fitted into the pulley groove 3d formed in the outer peripheral part 3j of the compressor pulley 3a of the third pulley 3.

The rib 11a is constructed of one protruding rib along a longitudinal direction of the inner peripheral surface of the attaching part 11. The belt attachment tool 9 can accurately be fixed to the outer peripheral part 3j of the compressor pulley 3a by fitting the rib 11a into the pulley groove 3d of the compressor pulley 3a when the belt attachment tool 9 is attached to the third pulley 3. The present embodiment is configured to provide only one rib 11a, but may be configured to provide a plurality of ribs 11a since at least one protruding rib has only to be present in the case of forming the rib 11a.

The installation part 12 constructing the side surface part 10 extends from one end of the attaching part 11 toward the boss part 5 of the third pulley 3. The installation part 12 performs the function of stabilizing the belt attachment tool 9 to the third pulley 3 by abutting on or coming into close contact with the pulley flange 3e formed on the compressor pulley 3a of the third pulley 3 when the belt attachment tool 9 is attached to the third pulley 3.

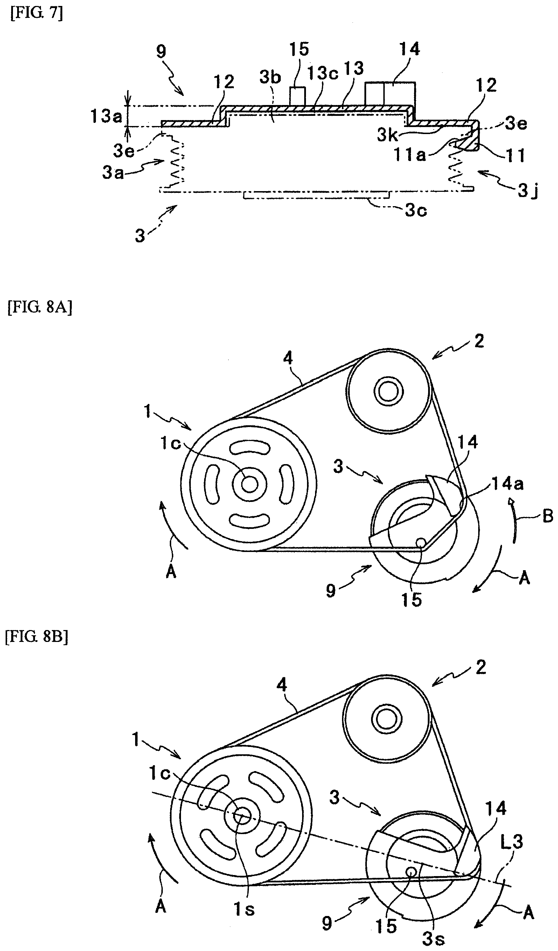

The protection part 13 is, as illustrated in FIG. 2, provided with a partially notched part 13b from a circular shape and has a shape having a step 13a with respect to the installation part 12. That is, in the present embodiment, the installation part 12 is coupled to the protection part 13 in a stepped manner through the step 13a. The step 13a of the protection part 13 performs the function of preventing the protection part 13 from coming into contact with the clutch hub 3b by forming a gap 13c between the protection part 13 and the clutch hub 3b of the third pulley 3 when the belt attachment tool 9 is attached to the third pulley 3 as illustrated in FIG. 7. Thus, the protection part 13 performs the function of covering the clutch hub 3b while avoiding the contact with the clutch hub 3b. In the present embodiment, the step 13a is formed between the installation part 12 and the protection part 13, but it may be formed in a shape continuously curved by forming the installation part 12 integrally to the protection part 13 without forming the step 13a.

Here, the protection part 13 is formed so as to cover, in a region inward the portion with which the installation part 12 comes into contact in the one side surface 3g (side surface of the side covered with the protection part 13) of the third pulley 3, at least a part of a portion with the longest distance (clutch hub 3b) in a vertical direction from a plane defined by a portion 3k (see FIG. 7) with which the installation part 12 comes into contact in the one side surface 3g of the third pulley 3. That is, in the present aspect, the protection part 13 is formed so as to cover at least a part of the clutch hub 3b that is a protrusion protruding most outwardly in an axial direction in a region inward the pulley flange 3e. The protection part 13 preferably covers at least substantially the center of the side surface 3g of the third pulley 3. That is, in this aspect, the boss part 5 is preferably covered. As a coverage ratio, the side surface part 10 preferably covers, for example, one-half or more of the side surface 3g (side surface of the side covered with the protection part 13) of the third pulley 3. That is, the side surface part 10 preferably covers from 50 to 100% of the side surface 3g of the third pulley 3. In the case where the coverage ratio is smaller than 50%, strong interference between the V-ribbed belt 4 and the third pulley 3 may occur to cause damage at the time of winding the V-ribbed belt 4 on the belt attachment tool 9.

Also, since the size of the gap 13c is properly set according to characteristics (misalignment limit etc.) of the applied pulley or the like, it is not particularly limited, but is preferably, for example, more than 0 and about 3.5 mm or less.

Also, portions of the attaching part 11, the installation part 12 and the protection part 13 in contact with the V-ribbed belt 4 are chamfered to have curved surface shapes. They are formed in order to prevent the V-ribbed belt 4 from being damaged at the time of winding the V-ribbed belt 4 on the third pulley 3 by using the belt attachment tool 9.

The first belt holding part 14 is projected along the outer periphery of the installation part 12 astride the installation part 12 and the protection part 13 as illustrated in FIG. 2. The first belt holding part 14 could be arranged on the side surface part 10 so as to be located in the side of the outer peripheral part 3j of the compressor pulley 3a when the belt attachment tool 9 is attached to the third pulley 3. This first belt holding part 14 performs the function of temporarily holding the V-ribbed belt 4 at the time of winding the V-ribbed belt 4 on the third pulley 3.

Also, the first belt holding part 14 and the second belt holding part 15 are arranged in a straight line, and a holding surface 14a (see FIG. 2) by which the V-ribbed belt 4 is held has a substantially involute curve shape in the shape viewing the belt attachment tool 9 from an upper surface. The holding surface 14a of the first belt holding part 14 is not limited to the substantially involute curve shape, and may have a substantially circular arc shape, a trapezoidal shape or a polygonal shape. Also, a substantially columnar shape may be employed as the shape of the first belt holding part 14 itself.

The first belt holding part 14 performs the function of bending and arranging the V-ribbed belt 4 along the outer peripheral part 3j of the compressor pulley 3a at the time of winding the V-ribbed belt 4 on the third pulley 3.

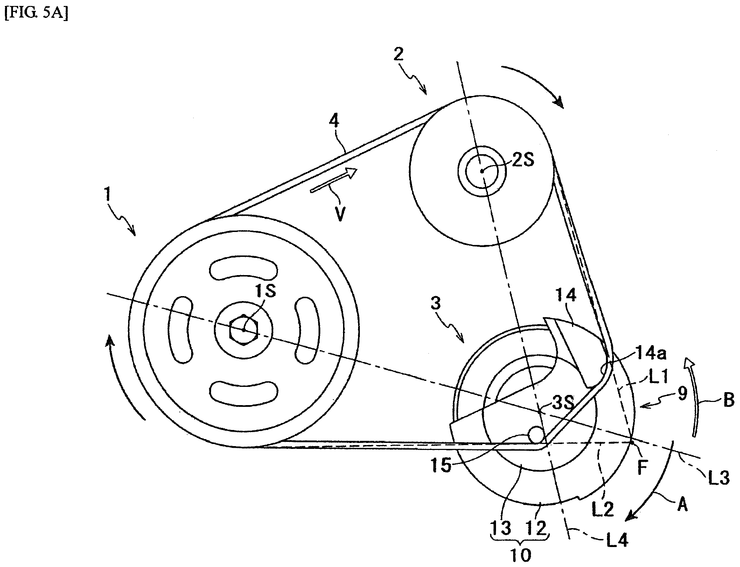

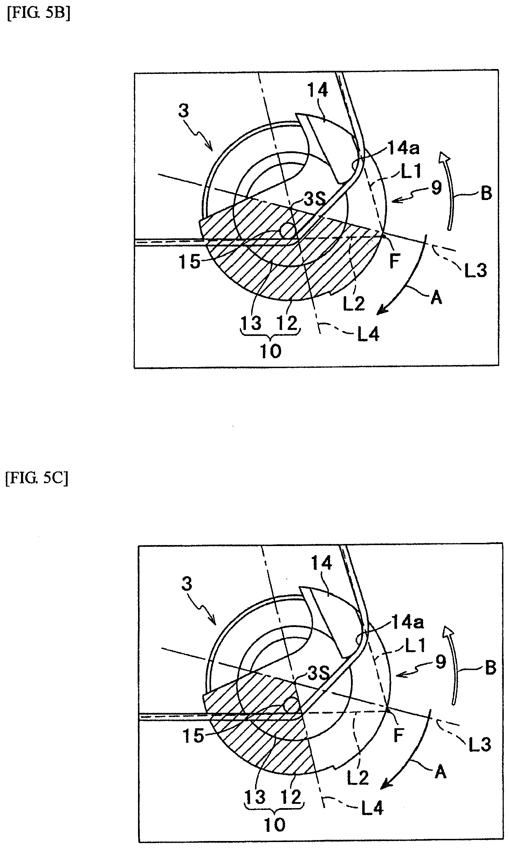

The second belt holding part 15 has a substantially columnar shape, and is projected on the protection part 13 as illustrated in FIG. 2. As a detailed position, as illustrated in FIG. 5A, at the time of winding the V-ribbed belt 4 on the first pulley 1, the second pulley 2, the first belt holding part 14, and the second belt holding part 15 with the belt attachment tool 9 installed on the third pulley 3, the second belt holding part 15 is formed on the side surface part 10 so that a point F (a vertex position of a resultant force of belt tension) of intersection between a first extension line L1 extending the V-ribbed belt 4 wound on the first belt holding part 14 from the outer periphery of the second pulley 2 and a second extension line L2 extending the V-ribbed belt 4 wound on the second belt holding part 15 from the outer periphery of the first pulley 1 is located to the front side in the rotation direction A of the third pulley 3 with respect to a center line L3 connecting the center 1S of the first pulley 1 with the center 3S of the third pulley 3 (a first arrangement condition) (see an area (oblique line) in FIG. 5B, in which the first arrangement condition is satisfied).

In the present invention, "at the time of winding the V-ribbed belt 4 on the first pulley 1, the second pulley 2, the first belt holding part 14, and the second belt holding part 15" refers to a state in which the V-ribbed belt 4 is wound on the first pulley 1, the second pulley 2, the first belt holding part 14, and the second belt holding part 15 along a running direction thereof and a stretch of the belt is minimized.

Furthermore, in the present embodiment, as illustrated in FIG. 5A, at the time of winding the V-ribbed belt 4 on the first pulley 1, the second pulley 2, the first belt holding part 14, and the second belt holding part 15 with the belt attachment tool 9 installed on the third pulley 3, the second belt holding part 15 is formed on the side surface part 10 so as to be located to the front side in the rotation direction A of the third pulley 3 with respect to a center line L4 connecting the center 2S of the second pulley 2 with the center 3S of the third pulley 3 (a second arrangement condition) (see an area (oblique line) in FIG 5C, in which the first arrangement condition and the second arrangement condition are satisfied).

In the present embodiment, the shape of the second belt holding part 15 is formed in a substantially columnar shape, and this is because the V-ribbed belt 4 is prevented from being damaged at the time of winding the V-ribbed belt 4 on the second belt holding part 15. Also, the shape of the second belt holding part 15 may have a substantially semicircular shape, a substantially crescent shape or a substantially polygonal shape.

### (Meaning of forming first belt holding part 14 and second belt holding part 15)

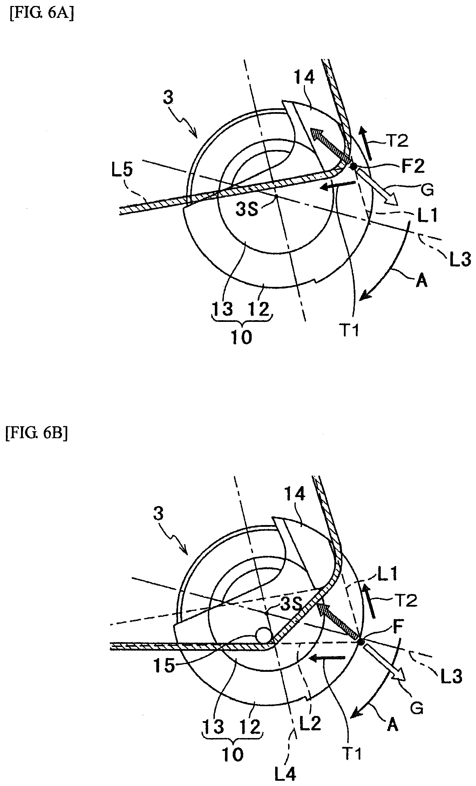

As illustrated in FIG. 6A, in the case where a conventional belt attachment tool in which the second belt holding part 15 is not formed and only the first belt holding part 14 is formed is attached to the third pulley 3, a point F2 (a vertex position of a resultant force of belt tension) of intersection between the first extension line L1 extending the V-ribbed belt 4 wound on the first belt holding part 14 from the outer periphery of the second pulley 2 and a third extension line L5 extending the V-ribbed belt 4 wound on the first belt holding part 14 from the outer periphery of the first pulley 1 is located to the back side in the rotation direction A of the third pulley 3 with respect to the center line L3 connecting the center 1S of the first pulley 1 with the center 3S of the third pulley 3. In this case, as illustrated in FIG. 6A, a force (a force, G in the drawing, by which the belt is stretched) balanced with the resultant force of belt tension (a resultant force of tension (T1 in the drawing) in a direction toward the first pulley 1 and tension (T2 in the drawing) in a direction toward the second pulley 2) does not exceed the tension in the direction toward the second pulley 2, and a rotation force of the first pulley 1 is not transmitted to the belt attachment tool and the third pulley 3 through the V-ribbed belt 4. Therefore, there are cases where the belt attachment tool and the third pulley 3 cannot be rotated (running idle or being rotated in the inverse rotation direction B).

In order to solve the problem described above, that is, in order that the force by which the belt is stretched exceeds the tension in the direction toward the second pulley 2, it is necessary to locate the intersection point F2 (the vertex position of the resultant force of the belt tension) to the front side in the rotation direction A of the third pulley 3 with respect to the center line L3 connecting the center 1S of the first pulley 1 with the center 3S of the third pulley 3.

Hence, like the belt attachment tool 9 of the present embodiment, the second belt holding part 15 is further formed in addition to the first belt holding part 14, and the second belt holding part 15 is arranged in the position in which the first arrangement condition described above is satisfied. As a result, the force by which the belt is stretched can exceed the tension in the direction toward the second pulley 2 by being constructed so as to locate the intersection point F (the vertex position of the resultant force of the belt tension) to the front side in the rotation direction A of the third pulley 3 with respect to the center line L3 connecting the center 1S of the first pulley 1 with the center 3S of the third pulley 3 as illustrated in FIG. 6B. Accordingly, tension is applied in the direction toward the first pulley 1, and the belt attachment tool 9 and the third pulley 3 can be prevented from being rotated in the inverse rotation direction B.

### (Method for using belt attachment tool 9)

Next, a method for using the belt attachment tool 9 will be described with reference to FIG. 7 to FIG. 9. The first pulley 1 can be rotated manually freely by coupling a wrench to the boss part 1c of the first pulley 1.

### <Procedure (a)>

First, as illustrated in FIG. 7, the belt attachment tool 9 is attached to the third pulley 3 so that the attaching part 11 is arranged along the outer peripheral part 3j of the compressor pulley 3a of the third pulley 3. At this time, the rib 11a formed on the attaching part 11 is fitted into the pulley groove 3d of the compressor pulley 3a, and the installation part 12 is abutted on the pulley flange 3e formed on the compressor pulley 3a of the third pulley 3. Accordingly, the protection part 13 is in a state covering the clutch hub 3b while forming the gap 13c with the clutch hub 3b (see FIG. 7).

### <Procedure (b)>

In this state, the V-ribbed belt 4 is first wound on the first pulley 1 and the second pulley 2. Then, as illustrated in FIG 8A, after the V-ribbed belt 4 is arranged along the outer peripheral part 3j of the compressor pulley 3a of the third pulley 3, it is further arranged along the holding surface 14a of the first belt holding part 14 astride the attaching part 11, bent in an involute curve shape, and wound so that an inner peripheral surface of the V-ribbed belt 4 abuts on the holding surface 14a of the first belt holding part 14, and is further wound on the second belt holding part 15. At this time, as illustrated in FIG. 8A, the V-ribbed belt 4 bent by the first belt holding part 14 is in a state in which the V-ribbed belt 4 passes on the protection part 13, and is wound on the second belt holding part 15 in a straight shape and wound on an outer peripheral part of the first pulley 1 from this second belt holding part 15. Since the second belt holding part 15 of the belt attachment tool 9 satisfies the first arrangement condition described above at this time, the belt attachment tool 9 and the third pulley 3 are not rotated in the inverse rotation direction B even when the V-ribbed belt 4 is wound on the belt attachment tool 9.

### <Procedure (c)>

Then, as illustrated in FIG. 8B, the first pulley 1 is rotated in the rotation direction A using by the wrench. Since the second belt holding part 15 of the belt attachment tool 9 satisfies the second arrangement condition described above at this time, tension applied to the V-ribbed belt 4 can be decreased as compared with the case where the second belt holding part 15 is located in the back side in the rotation direction A with respect to the center line L4. Accordingly, rotation of the third pulley 3 in the rotation direction A is facilitated.

Specifically, the first pulley 1, the second pulley 2 and the third pulley 3 are first rotated in the rotation direction A so as to shift from the state of FIG. 8A to the state of FIG. 8B. Then, the first belt holding part 14 on which the V-ribbed belt 4 is wound is moved to a position of the center line L3. Then, when the first belt holding part 14 is moved to the position of the center line L3, the V-ribbed belt 4 is unwound from the second belt holding part 15. In other words, the state (winding state) in which the V-ribbed belt 4 is held in the second belt holding part 15 is maintained until the first belt holding part 14 goes over the center line L3 to the front side in the rotation direction A.

The V-ribbed belt 4 is stretched to thereby generate high tension. Since the V-ribbed belt 4 crosses on the attaching part 11, this tension serves as a pressing action pressing the attaching part 11 against the outer peripheral part 3j of the third pulley 3, and thus, the belt attachment tool 9 is more strongly fixed to the third pulley 3.

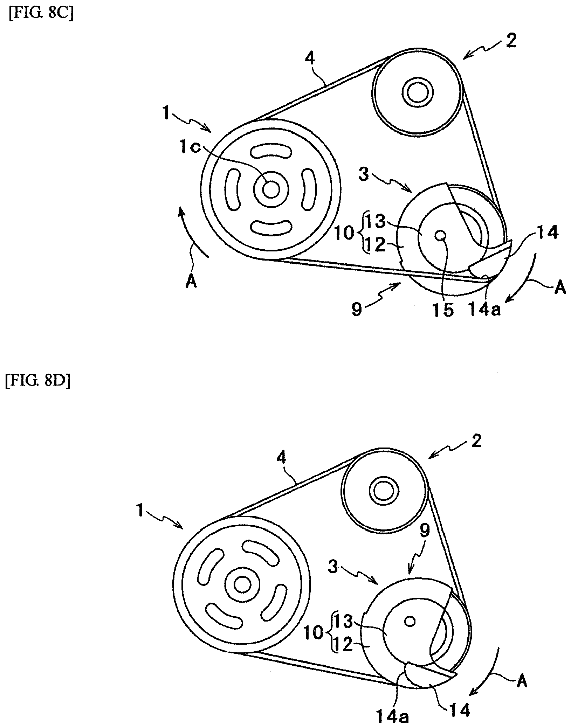

When the first pulley 1, the second pulley 2 and the third pulley 3 are then rotated in the rotation direction A so as to shift from the state of FIG. 8B to the state of FIG. 8C, the V-ribbed belt 4 on the side surface part 10 is slid to the outer peripheral side of the belt attachment tool 9 according to the rotation. On the other hand, the V-ribbed belt 4 wound on the first belt holding part 14 is moved on the outer peripheral part 3j of the compressor pulley 3a. Specifically, when the third pulley 3 is rotated in the rotation direction A, an area in which the rib 4a of the V-ribbed belt 4 is fitted into the pulley groove 3d of the compressor pulley 3a of the third pulley 3 is gradually increased.

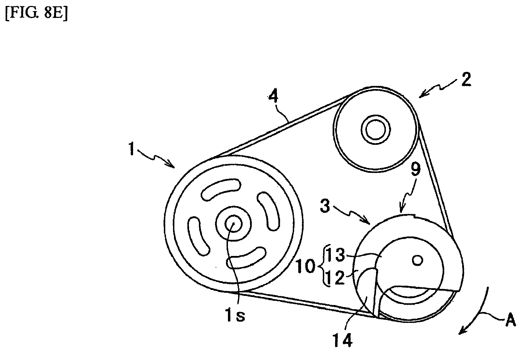

Furthermore, the first pulley 1, the second pulley 2 and the third pulley 3 are rotated in the rotation direction A so as to shift from the state of FIG. 8C to the state of FIG. 8E through the state of FIG. 8D. Then, the V-ribbed belt 4 remaining on the side surface part 10 is moved away from the side surface part 10, and is completely moved to the outer peripheral part 3j of the compressor pulley 3a of the third pulley 3. After this movement, the belt attachment tool 9 is recovered from the third pulley 3.

Through the procedures described above, the V-ribbed belt 4 can be wound on the first pulley 1, the second pulley 2 and the third pulley 3 as illustrated in FIG. 3.

According to the configuration described above, the side surface part 10 of the belt attachment tool 9 is installed on one side surface 3g of the third pulley 3 and the attaching part 11 is arranged along the outer peripheral part 3j of the third pulley 3. Therefore, the belt attachment tool 9 can stably be installed on the third pulley 3.

Also, the first belt holding part 14 and the second belt holding part 15 are formed on the side surface part 10, and the first belt holding part 14 is arranged along the outer periphery of the side surface part 10. In addition, the second belt holding part 15 is arranged so that, at the time of winding the V-ribbed belt 4 on the first pulley 1, the second pulley 2, the first belt holding part 14 and the second belt holding part 15, the point F of intersection between the first extension line L1 extending the V-ribbed belt 4 wound on the first belt holding part 14 from the outer periphery of the second pulley 2 and the second extension line L2 extending the V-ribbed belt 4 wound on the second belt holding part 15 from the outer periphery of the first pulley 1 is located to the front side in the rotation direction A of the third pulley 3 with respect to the center line L3 connecting the center 1S of the first pulley 1 with the center 3S of the third pulley 3 (the first arrangement condition).

If the second belt holding part 15 is arranged so that the point F of intersection between the first extension line L1 and the second extension line L2 is located to the back side in the rotation direction A of the third pulley 3 with respect to the center line L3 connecting the center 1S of the first pulley 1 with the center 3S of the third pulley 3, there are cases where the third pulley 3 is inversely rotated (tension in the direction toward the second pulley 2 is applied to the V-ribbed belt 4) or the belt attachment tool 9 itself slides on the third pulley 3 to run idle and thus the V-ribbed belt 4 cannot be wound on the outer periphery of the third pulley 3. However, since the second belt holding part is arranged so as to satisfy the first arrangement condition described above, the tension in the rotation direction A is applied to the V-ribbed belt 4 (the tension in the direction toward the first pulley 1 is applied to the V-ribbed belt 4) and the third pulley 3 can be prevented from being inversely rotated (rotated in the inverse rotation direction B).

Also, the second belt holding part 15 is arranged to the front side in the rotation direction A of the third pulley 3 with respect to the center line L4 connecting the center 2S of the second pulley 2 with the center 3S of the third pulley 3 (the second arrangement condition). Therefore, tension applied to the whole V-ribbed belt 4 at the time of winding the V-ribbed belt 4 on the first pulley 1, the second pulley 2, the first belt holding part 14, and the second belt holding part 15 can be reduced as compared with the case where the second belt holding part 15 is located in the back side in the rotation direction A of the third pulley 3 with respect to the center line L4. Accordingly, rotation of the third pulley 3 in the rotation direction A (the direction toward the first pulley 1) at the time of winding the V-ribbed belt 4 on the outer peripheral part 3j of the third pulley 3 can be facilitated.

In addition, the protection part 13 covers at least a part (at least a part of the clutch hub 3b) of the portion with the longest distance in one side surface 3g of the third pulley 3 (including the case where the distance from the plane defined by the portion with which the installation part 12 comes into contact in one side surface 3g of the third pulley 3 is zero) in the vertical direction from the plane defined by the portion with which the installation part 12 comes into contact, in the region inward the portion with which the installation part 12 comes into contact in the one side surface 3g of the third pulley 3. Therefore, interference between the clutch hub 3b of the third pulley 3 and the V-ribbed belt 4 can be prevented from occurring at the time of winding the V-ribbed belt 4 on the third pulley 3, to thereby protect the clutch hub 3b and the V-ribbed belt 4.

Also, since the protection part 13 is coupled to the installation part 12 in a stepped manner and the gap 13c by the step 13a is formed between the clutch hub 3b and the protection part 13, the protection part 13 can surely cover the clutch hub 3b without making contact therewith.

In addition, since the portion (the holding surface 14a) of the first belt holding part 14, on which the V-ribbed belt 4 is wound is formed in a substantially circular arc shape, a load on the V-ribbed belt 4 at the time of winding the V-ribbed belt 4 on the first belt holding part 14 can be reduced.

Also, the portion (the holding surface 14a) of the first belt holding part 14, on which the V-ribbed belt 4 is wound is formed in a substantially involute curve shape. Therefore, the V-ribbed belt 4 can efficiently be wound without applying excessive tension thereto at the time of winding the V-ribbed belt 4 on the first belt holding part 14. Also, since the first belt holding part 14 and the second belt holding part 15 are arranged in a straight line, the length of the V-ribbed belt 4 at the time of winding the V-ribbed belt 4 on the first belt holding part 14 and the second belt holding part 15 can be set in the shortest length, to thereby minimize the force by which the V-ribbed belt 4 is stretched. As a result, a work load of winding the V-ribbed belt 4 on the third pulley 3 by using the belt attachment tool 9 can be reduced.

### (Other embodiments)

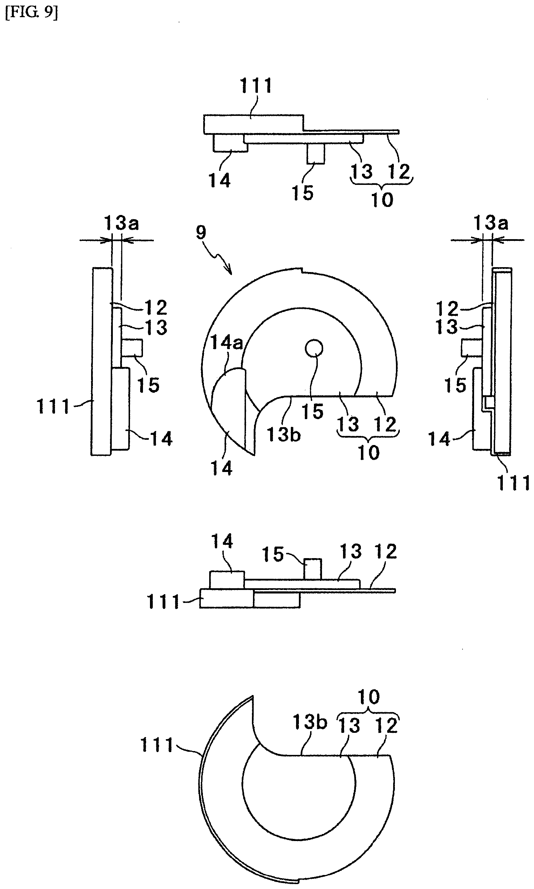

The belt attachment tool 9 in the embodiment described above is configured to provide the rib 11a on the inner peripheral surface side of the attaching part 11, but may be configured so as not to provide the rib 11a on the inner peripheral surface side of an attaching part 111 as illustrated in FIG. 9. In this case, since the rib 11a is not formed, a manufacturing cost can be reduced. Stability at the time of attaching the belt attachment tool 9 to a third pulley 3 can be secured by abutting the attaching part 111 without the rib on an outer peripheral part 3j of the third pulley 3 and abutting an installation part 12 on a pulley flange 3e.

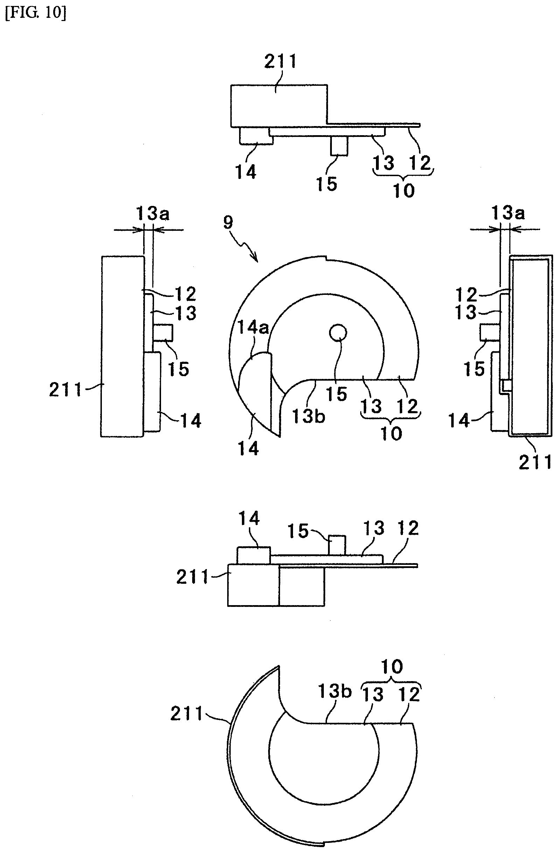

Also, as illustrated in FIG. 10, an attaching part 211 of a belt attachment tool 9 may be configured to have such a width as to cover an outer peripheral part 3j of a compressor pulley 3a in a width direction (a width of a third pulley 3 in an axial direction). In this case, the attaching part 211 may be provided with an abutting part 211d for abutting on a pulley flange 3f of the compressor pulley 3a. By forming this butting part 211d, installation of the belt attachment tool 9 on the third pulley 3 can be more stabilized. Also, it may be configured to provide one or more ribs to an inner peripheral surface side of the attaching part 211 illustrated in FIG. 10.

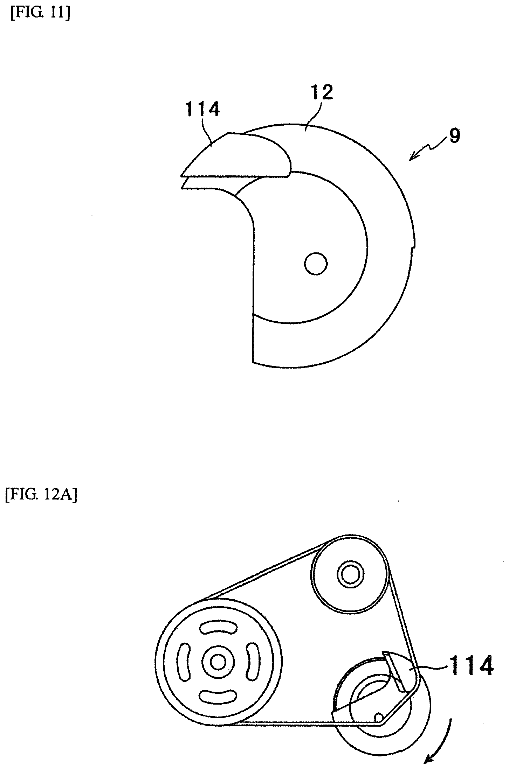

Also, in the belt attachment tool 9 in the embodiment described above, the first belt holding part 14 is arranged along the outer periphery of the installation part 12, but is not limited to this, and a first belt holding part 114 may have a shape in which a part of the first belt holding part 114 is projected outwardly from an outer periphery of an installation part 12 as illustrated in FIG. 11.

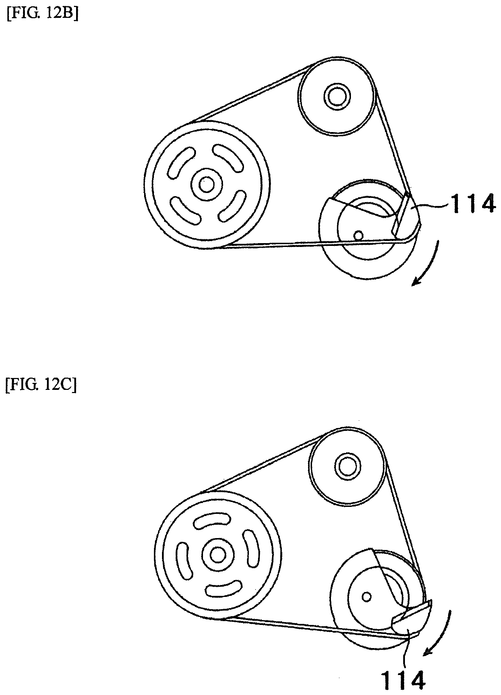

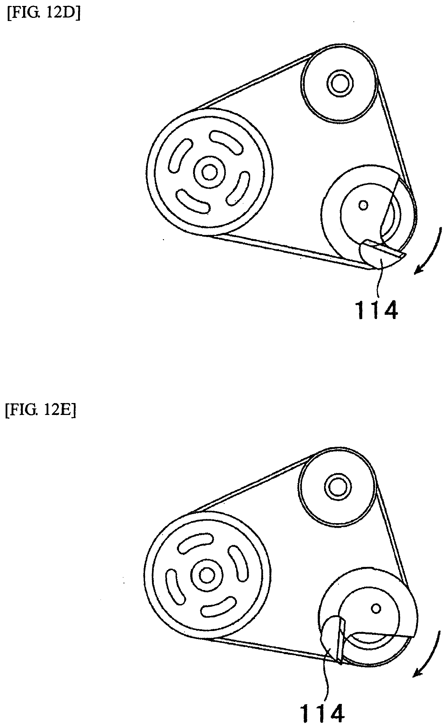

In this case, a part of the first belt holding part 114 is projected outwardly from the outer periphery of the installation part 12. Therefore, a V-ribbed belt 4 can be spaced from the outer periphery of the installation part 12 or a pulley flange 3e of a third pulley 3 at the time of winding on the first belt holding part 114. As a result, it becomes easy to wind the V-ribbed belt 4 on an outer peripheral part 3j of the third pulley 3 from the first belt holding part 114, and the V-ribbed belt 4 can smoothly be shifted to the outer peripheral part 3j of the third pulley 3 (see FIG. 12A to FIG. 12E).

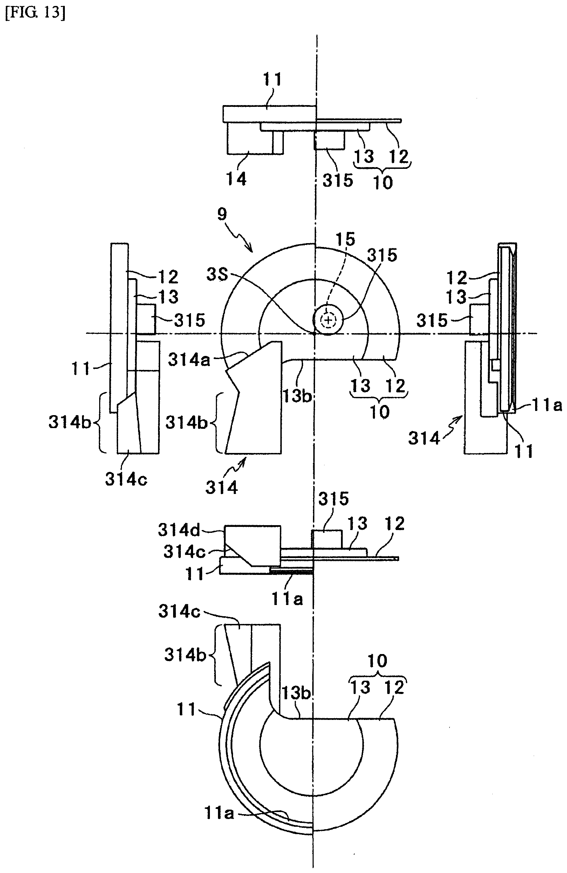

Furthermore, like a belt attachment tool 9 illustrated in FIG. 13, it is preferable that a first belt holding part 314 has a projection 314b projected outwardly from an outer periphery of an installation part 12, and this projection 314b has a shape projected further outwardly than the portion projected outwardly from the outer periphery of the installation part 12 in the first belt holding part 114 illustrated in FIG. 11. Thus, the projection 314b of the first belt holding part 314 is formed in the shape projected greatly outwardly from the outer periphery of the installation part 12. Therefore, since the projection 314b of the first belt holding part 314 is projected greatly outwardly from the outer periphery of the installation part 12, a V-ribbed belt 4 can greatly be spaced from the outer periphery of the installation part 12 or a pulley flange 3e of a third pulley 3 at the time of winding on the first belt holding part 314. As a result, it becomes easier to wind the V-ribbed belt 4 on an outer peripheral part 3j of the third pulley 3 from the first belt holding part 314, and the V-ribbed belt 4 can more smoothly be shifted to the outer peripheral part 3j of the third pulley 3.

Also, like the belt attachment tool 9 illustrated in FIG. 13, a lower part of the projection 314b of the first belt holding part 314 may have an inclined surface 314c inclined from a side surface 314d of the first belt holding part 314 toward the lower side. This inclined surface 314c performs the function of smoothly sliding the V-ribbed belt 4 wound on the inclined surface 314c from the inclined surface 314c to the outer peripheral part 3j of the third pulley 3 when the V-ribbed belt 4 wound on a holding surface 314a of the first belt holding part 314 is also wound on the inclined surface 314c with rotation of the third pulley 3. That is, by providing the inclined surface 314c on the lower part of the first belt holding part 314, the V-ribbed belt 4 wound on the first belt holding part 314 can easily be routed to the side of the third pulley 3 and the V-ribbed belt 4 can smoothly be shifted from the first belt holding part 314 to the outer peripheral part 3j of the third pulley 3.

The holding surface 314a of the first belt holding part 314 of the belt attachment tool 9 illustrated in FIG. 13 has a plane shape (a straight shape in top view), but is not limited to this shape, and may have a curved surface shape (a curved shape in top view).

Also, like the belt attachment tool 9 illustrated in FIG. 13, it is preferred that a second belt holding part 315 is formed so that a position in which the V-ribbed belt 4 is wound is set in a position away from the center 3S (a position corresponding to the center 3S of the third pulley 3) in a radial outward direction. This is because as the position in which the V-ribbed belt 4 is wound on the second belt holding part 315 is set in the position nearer to the center 3S of the third pulley 3, a larger force is required in order to rotate the third pulley 3 and thus the V-ribbed belt 4 cannot be wound smoothly. On the other hand, in the case where the position in which the V-ribbed belt 4 is wound on the second belt holding part 315 is set in the position away from the center 3S of the third pulley 3 in the radial outward direction, the third pulley 3 can be rotated with a relatively small force. Therefore, it is preferable for winding of the V-ribbed belt 4 (a smooth shifting). The second belt holding part 315 of the belt attachment tool 9 illustrated in FIG. 13 is constructed so that the position in which the V-ribbed belt 4 is wound is set in the position further away from the center 3S in the radial outward direction by increasing the diameter of the columnar second belt holding part 15 of the belt attachment tool 9 illustrated in FIG. 2. The second belt holding part 315 may be formed by arranging the second belt holding part 15 of the belt attachment tool 9 illustrated in FIG. 2 in the position further away from the center 3S in the radial outward direction.

Also, in the belt attachment tool 9 in the embodiments described above, the first belt holding part 14 (114, 314) is formed separately from the second belt holding part 15 (315), but the first belt holding part 14 (114, 314) may be formed integrally to the second belt holding part 15 (315). In this case, strength can be increased as compared with the case where the first belt holding part 14 (114, 314) is formed separately from the second belt holding part 15 (315).

Furthermore, in the case where the first belt holding part 14 (114, 314) is formed integrally to the second belt holding part 15 (315), the portion of the integrally formed first belt holding part 14 (114, 314) and second belt holding part 15 (315), on which the V-ribbed belt 4 is wound may be formed in a circular arc shape. In this case, a load on the V-ribbed belt 4 at the time of winding the V-ribbed belt 4 can be reduced.

Also, the embodiments described above describe the case of using the belt attachment tool 9 by attaching to the third pulley 3 having the clutch hub 3b, but the belt attachment tool 9 can also be installed and used to a pulley in which the distance from the plane defined by the portion with which the installation part 12 comes into contact in the side surface 3g of the third pulley 3 is "zero", that is, the first pulley 1 or the second pulley 2 without a portion projected to the side surface of the pulley.

In addition, the embodiments described above describe the case where the number of pulleys is three, but can be applied to the case where the number of pulleys is four or more. In that case, the first pulley, the second pulley and the third pulley are any consecutive pulleys, and the third pulley is the pulley sandwiched between the first pulley and the second pulley.

The present application is based on Japanese patent application No.2014-201007 filed on September 30, 2014 and Japanese patent application No.2015-178450 filed on September 10, 2015, and the contents thereof are incorporated herein by reference.

### DESCRIPTION OF REFERENCE NUMERALS AND SIGNS

- 1: First Pulley
- 2: Second Pulley
- 3: Third Pulley
- 3a: Compressor Pulley
- 3b: Clutch Hub
- 3c: Stator
- 4: V-ribbed Belt
- 9: Belt Attachment Tool
- 10: Side Surface Part
- 11: Attaching Part
- 12: Installation Part
- 13: Protection Part
- 14: First Belt Holding Part
- 15: Second Belt Holding Part
- A: Rotation Direction

## Claims

1. A belt attachment tool (9) used for further winding a belt (4), which is wound on a first pulley (1) and a second pulley (2) and is stretchable in a direction of a circumferential length, on a third pulley (3) by using rotation of the third pulley (3),
the belt attachment tool (9) comprising:
a side surface part (10) installed on a side of one side surface of the third pulley (3),
an attaching part (11) installed along an outer peripheral part of the third pulley (3),
a first belt holding part (14) formed along an outer periphery of the side surface part (10), and
a second belt holding part (15) formed on the side surface part (10),
wherein the second belt holding part (15) is formed on the side surface part (10) so as to satisfy, when the belt (4) is wound on the first pulley (1), the second pulley (2), the first belt holding part (14), and the second belt holding part (15), a first arrangement condition where the second belt holding part (15) is arranged so that a point of intersection (F) between a first extension line (L1) extending the belt (4) wound on the first belt holding part (14) from an outer periphery of the second pulley (2) and a second extension line (L2) extending the belt (4) wound on the second belt holding part (15) from an outer periphery of the first pulley (1) is located to a front side in a rotation direction (A) of the third pulley (3) with respect to a center line (L3) connecting a center (1S) of the first pulley (1) with a center of the third pulley (3); **characterized in that** the side surface part (10) comprises a protection part (13), the protection part (13) covering at least substantially the center of the one side surface of the third pulley (3).

2. The belt attachment tool according to Claim 1,
wherein the second belt holding part (15) is formed on the side surface part (10) so as to further satisfy, when the belt (4) is wound on the first pulley (1), the second pulley (2), the first belt holding part (14), and the second belt holding part (15), a second arrangement condition where the second belt holding part (15) is arranged to a front side in the rotation direction (A) of the third pulley (3) with respect to a center line (L4) connecting a center (2S) of the second pulley (2) with the center (3S) of the third pulley (3).

3. The belt attachment tool (9) according to Claim 1 or 2,
wherein the side surface part (10) comprises
an installation part (12) brought into contact with at least a part of the one side surface of the third pulley (3), and
the protection part (13) which does not come into contact with the one side surface of the third pulley (3) and covers at least a part of the one side surface, and
wherein the protection part (13) covers at least a part of a portion with the longest distance in a vertical direction from a plane defined by a portion with which the installation part (12) comes into contact in the one side surface, in a region inward the portion with which the installation part (12) comes into contact in the one side surface of the third pulley (3).

4. The belt attachment tool (9) according to Claim 3,
wherein the installation part (12) is coupled to the protection part (13) in a stepped manner.

5. The belt attachment tool (9) according to Claim 1 or 2,
wherein a part of the first belt holding part (14) is projected outwardly from the outer periphery of the side surface part (10).

6. The belt attachment tool (9) according to Claim 1 or 2,
wherein a portion of the first belt holding part (14), on which the belt (4) is wound has a substantially circular arc shape.

7. The belt attachment tool (9) according to Claim 1 or 2,
wherein a portion of the first belt holding part (14), on which the belt (4) is wound has a substantially involute curve shape, and the first belt holding part (14) and the second belt holding part (15) are arranged in a straight line.

8. The belt attachment tool (9) according to Claim 1 or 2,
wherein the first belt holding part (14) is formed integrally with the second belt holding part (15).

9. The belt attachment tool (9) according to Claim 8,
wherein in the first belt holding part (14) and the second belt holding part (15) that are integrally formed, a portion on which the belt (4) is wound has a substantially circular arc shape.

## Patentansprüche

1. Gurtbefestigungswerkzeug (9), das verwendet wird, um weiter einen Gurt (4), der um eine erste Rolle (1) und eine zweite Rolle (2) gewickelt ist und in einer Richtung einer Umfangslänge dehnbar ist, um eine dritte Rolle (3) unter Verwendung einer Drehung der dritten Rolle (3) zu wickeln,
wobei das Gurtbefestigungswerkzeug (9) umfasst:
ein Seitenflächenteil (10), das auf einer Seite einer Seitenfläche der dritten Rolle (3) installiert ist,
ein Befestigungsteil (11), das entlang eines äußeren Umfangsteils der dritten Rolle (3) installiert ist,
ein erstes Gurthalteteil (14), das entlang eines äußeren Umfangs des Seitenflächenteils (10) gebildet ist, und
ein zweites Gurthalteteil (15), das auf dem Seitenflächenteil (10) gebildet ist,
wobei das zweite Gurthalteteil (15) auf dem Seitenflächenteil (10) gebildet ist, um, wenn der Gurt (4) um die erste Rolle (1), die zweite Rolle (2), das erste Gurthalteteil (14) und das zweite Gurthalteteil (15) gewickelt ist, eine erste Anordnungsbedingung zu erfüllen, wo das zweite Gurthalteteil (15) so angeordnet ist, dass ein Schnittpunkt (F) zwischen einer ersten Verlängerungslinie (L1), die den Gurt (4), der um das erste Gurthalteteil (14) gewickelt ist, von einem äußeren Umfang der zweiten Rolle (2) verlängert, und einer zweiten Verlängerungslinie (L2), die den Gurt (4), der um das zweite Gurthalteteil (15) gewickelt ist, von einem äußeren Umfang der ersten Rolle (1) verlängert, sich an einer Vorderseite in einer Drehrichtung (A) der dritten Rolle (3) in Bezug auf eine Mittellinie (L3), die einen Mittelpunkt (1S) der ersten Rolle (1) mit einem Mittelpunkt der dritten Rolle (3) verbindet, befindet; **dadurch gekennzeichnet, dass** das Seitenflächenteil (10) ein Schutzteil (13) umfasst, wobei das Schutzteil (13) zumindest im Wesentlichen den Mittelpunkt der einen Seitenfläche der dritten Rolle (3) bedeckt.

2. Gurtbefestigungswerkzeug nach Anspruch 1,
wobei das zweite Gurthalteteil (15) auf dem Seitenflächenteil (10) gebildet ist, um weiter, wenn der Gurt (4) um die erste Rolle (1), die zweite Rolle (2), das erste Gurthalteteil (14) und das zweite Gurthalteteil (15) gewickelt ist, eine zweite Anordnungsbedingung zu erfüllen, wo das zweite Gurthalteteil (15) an einer Vorderseite in der Drehrichtung (A) der dritten Rolle (3) in Bezug auf eine Mittellinie (L4) angeordnet ist, die einen Mittelpunkt (2S) der zweiten Rolle (2) mit dem Mittelpunkt (3S) der dritten Rolle (3) verbindet.

3. Gurtbefestigungswerkzeug (9) nach Anspruch 1 oder 2,
wobei das Seitenflächenteil (10) umfasst
ein Installationsteil (12), das mit zumindest einem Teil der einen Seitenfläche der dritten Rolle (3) in Kontakt gebracht wird, und
das Schutzteil (13), das nicht mit der einen Seitenfläche der dritten Rolle (3) in Kontakt kommt und zumindest ein Teil der einen Seitenfläche bedeckt, und
wobei das Schutzteil (13) zumindest ein Teil eines Abschnitts mit dem längsten Abstand in einer vertikalen Richtung von einer Ebene, die durch einen Abschnitt definiert ist, mit dem das Installationsteil (12) in der einen Seitenfläche in Kontakt kommt, in einem Bereich einwärts vom Abschnitt, mit dem das Installationsteil (12) in der einen Seitenfläche der dritten Rolle (3) in Kontakt kommt, bedeckt.

4. Gurtbefestigungswerkzeug (9) nach Anspruch 3,
wobei das Installationsteil (12) mit dem Schutzteil (13) in abgestufter Weise gekoppelt ist.

5. Gurtbefestigungswerkzeug (9) nach Anspruch 1 oder 2,
wobei ein Teil des ersten Gurthalteteils (14) vom äußeren Umfang des Seitenflächenteils (10) nach außen vorsteht.

6. Gurtbefestigungswerkzeug (9) nach Anspruch 1 oder 2,
wobei ein Abschnitt des ersten Gurthalteteils (14), um den der Gurt (4) gewickelt ist, eine im Wesentlichen Kreisbogenform aufweist.

7. Befestigungswerkzeug (9) nach Anspruch 1 oder 2,
wobei ein Abschnitt des ersten Gurthalteteils (14), um den der Gurt (4) gewickelt ist, eine im Wesentlichen Evolventenkurvenform aufweist, und das erste Gurthalteteil (14) und das zweite Gurthalteteil (15) in einer geraden Linie angeordnet sind.

8. Gurtbefestigungswerkzeug (9) nach Anspruch 1 oder 2,
wobei das erste Gurthalteteil (14) einstückig mit dem zweiten Gurthalteteil (15) gebildet ist.

9. Gurtbefestigungswerkzeug (9) nach Anspruch 8,
wobei im ersten Gurthalteteil (14) und zweiten Gurthalteteil (15), die einstückig gebildet sind, ein Abschnitt, um den der Gurt (4) gewickelt ist, eine im Wesentlichen Kreisbogenform aufweist.

## Revendications

1. Outil de fixation de courroie (9) utilisé pour enrouler plus avant une courroie (4), qui est enroulée sur une première poulie (1) et une deuxième poulie (2) et peut être étirée dans une direction d'une longueur circonférentielle, sur une troisième poulie (3) à l'aide d'une rotation de la troisième poulie (3),
l'outil de fixation de courroie (9) comprenant :
une partie de surface de côté (10) installée sur un côté d'une surface de côté de la troisième poulie (3),
une partie de fixation (11) installée le long d'une partie périphérique externe de la troisième poulie (3),
une première partie de maintien de courroie (14) formée le long d'une périphérie externe de la partie de surface de côté (10), et
une seconde partie de maintien de courroie (15) formée sur la partie de surface de côté (10),
dans lequel la seconde partie de maintien de courroie (15) est formée sur la partie de surface de côté (10) de façon à satisfaire, lorsque la courroie (4) est enroulée sur la première poulie (1), la deuxième poulie (2), la première partie de maintien de courroie (14) et la seconde partie de maintien de courroie (15), une première condition d'agencement où la seconde partie de maintien de courroie (15) est agencée pour qu'un point d'intersection (F) entre une première droite d'extension (L1) étendant la courroie (4) enroulée sur la première partie de maintien de courroie (14) depuis une périphérie externe de la deuxième poulie (2) et une seconde droite d'extension (L2) étendant la courroie (4) enroulée sur la seconde partie de maintien de courroie (15) depuis une périphérie externe de la première poulie (1) soit situé vers un côté avant dans un sens de rotation (A) de la troisième poulie (3) par rapport à une droite centrale (L3) reliant un centre (1S) de la première poulie (1) à un centre de la troisième poulie (3) ; **caractérisé en ce que** la partie de surface de côté (10) comprend une partie de protection (13), la partie de protection (13) couvrant au moins sensiblement le centre de la surface de côté de la troisième poulie (3).

2. Outil de fixation de courroie selon la revendication 1,
dans lequel la seconde partie de maintien de courroie (15) est formée sur la partie de surface de côté (10) de façon à satisfaire en outre, lorsque la courroie (4) est enroulée sur la première poulie (1), la deuxième poulie (2), la première partie de maintien de courroie (14) et la seconde partie de maintien de courroie (15), une seconde condition d'agencement où la seconde partie de maintien de courroie (15) est agencée vers un côté avant dans le sens de rotation (A) de la troisième poulie (3) par rapport à une droite centrale (L4) reliant un centre (2S) de la deuxième poulie (2) au centre (3S) de la troisième poulie (3).

3. Outil de fixation de courroie (9) selon la revendication 1 ou 2,
dans lequel la partie de surface de côté (10) comprend :
une partie d'installation (12) amenée en contact avec au moins une partie de la surface de côté de la troisième poulie (3), et
la partie de protection (13) qui ne vient pas en contact avec la surface de côté de la troisième poulie (3) et couvre au moins une partie de la surface de côté, et
dans lequel la partie de protection (13) couvre au moins une partie d'une portion ayant la plus longue distance dans une direction verticale depuis un plan défini par une portion avec laquelle la partie d'installation (12) vient en contact dans la surface de côté, dans une région vers l'intérieur de la portion avec laquelle la partie d'installation (12) vient en contact dans la surface de côté de la troisième poulie (3).

4. Outil de fixation de courroie (9) selon la revendication 3,
dans lequel la partie d'installation (12) est couplée à la partie de protection (13) de manière étagée.

5. Outil de fixation de courroie (9) selon la revendication 1 ou 2,
dans lequel une partie de la première partie de maintien de courroie (14) dépasse vers l'extérieur à partir de la périphérie externe de la partie de surface de côté (10).

6. Outil de fixation de courroie (9) selon la revendication 1 ou 2,
dans lequel une portion de la première partie de maintien de courroie (14), sur laquelle la courroie (4) est enroulée a sensiblement une forme d'arc circulaire.

7. Outil de fixation de courroie (9) selon la revendication 1 ou 2,
dans lequel une portion de la première partie de maintien de courroie (14), sur laquelle la courroie (4) est enroulée a sensiblement une forme de courbe involutive, et la première partie de maintien de courroie (14) et la seconde partie de maintien de courroie (15) sont agencées selon une droite.

8. Outil de fixation de courroie (9) selon la revendication 1 ou 2,
dans lequel la première partie de maintien de courroie (14) est formée solidairement avec la seconde partie de maintien de courroie (15).

9. Outil de fixation de courroie (9) selon la revendication 8,
dans lequel, dans la première partie de maintien de courroie (14) et la seconde partie de maintien de courroie (15) qui sont formées solidairement, une portion sur laquelle la courroie (4) est enroulée a sensiblement une forme d'arc circulaire.
